# EUROPÄISCHE PATENTSCHRIFT

(11) **EP 3 041 710 B1**
(45) Veröffentlichungstag und Bekanntmachung des Hinweises auf die Patenterteilung: **11.10.2017**
(21) Anmeldenummer: 14747948.9
(22) Anmeldetag: 07.08.2014
(51) Int. Cl.: B60Q 9/00, B60R 1/00, B62D 15/02, G06K 9/00

(54) **VERFAHREN ZUM MANÖVRIEREN EINES FAHRZEUGES**
METHOD TO MANOEURVER A VEHICLE
METHODE POUR LA MANEUVRE UN VEHICULE

(30) Priorität: 05.09.2013 DE 102013217699
(43) Veröffentlichungstag der Anmeldung: 13.07.2016
(73) Patentinhaber: Robert Bosch GmbH, 70442 Stuttgart (DE)
(72) Erfinder: NIEM, Wolfgang, 31141 Hildesheim (DE); LOOS, Hartmut, 31141 Hildesheim (DE)
(86) Internationale Anmeldenummer: PCT/EP2014/066954
(87) Internationale Veröffentlichungsnummer: WO 2015/032578

(56) Entgegenhaltungen:
- EP-A1- 1 777 144
- FR-A1- 2 977 550
- US-A1- 2003 165 255
- US-A1- 2008 129 539
- US-A1- 2010 201 818

## Beschreibung

Die Erfindung betrifft ein Manövrierassistenzsystem mit einem Verfahren zum Manövrieren eines Fahrzeuges, insbesondere zum Manövrieren eines Fahrzeuges in einen Parkraum.

### Stand der Technik

Aus dem Stand der Technik sind sogenannte Einparkhilfen für Fahrzeuge z. B. für Pkws bekannt. Derartige Einparkhilfen werden üblicherweise durch Manövrierassistenzsysteme sowie Verfahren zum Manövrieren von Fahrzeugen bereitgestellt.

Dabei bieten kostengünstigere Rückfahrkamera-basierte Manövrierassistenzsysteme die Möglichkeit, den Bereich hinter dem Fahrzeug beim Rückwärtsfahren auf einem Bildschirm mitzuverfolgen. Bereiche, welche nicht von der Rückfahrkamera erfasst werden, beispielsweise die Bereiche seitlich neben dem Fahrzeug, können somit nicht angezeigt werden. Insbesondere am Ende des Einparkmanövers werden deshalb bei derartigen Rückfahrkamera-basierten Manövrierassistenzsystemen die Begrenzungslinien oder anderweitige den Parkraum begrenzende bzw. kennzeichnende Strukturen nicht mehr vom Manövrierassistenzsystem erfasst und werden somit nicht mehr auf dem Bildschirm angezeigt.

Des Weiteren sind aus dem Stand der Technik sogenannte Surround View-Systeme bekannt. Derartige Surround View-Systeme basieren typischerweise auf mehreren, beispielsweise 3 bis 6, Kameras und bieten eine gute Rundumsicht, welche auf einem Bildschirm eines Manövrierassistenzsystems angezeigt werden kann. Derartige Manövrierassistsysteme erlauben deshalb ein präzises Ausrichten eines Fahrzeuges an Parklinien oder anderweitigen einen Parkraum begrenzenden Strukturen. Nachteilig sind bei derartigen Surround View-Systemen allerdings die höheren Kosten aufgrund mehrerer Kameras.

Aus der US 2003/0165255 A1 sind ein Gerät zum Verarbeiten von Umgebungsbildern eines Fahrzeugs sowie ein Aufzeichnungsmedium bekannt, die in der Lage sind, eine Bildszene abzuleiten, die das Blickfeld einer an der Rückseite eines Fahrzeugs angeordneten Rückfahrkamera verlassen hat, und ein Bild eines Bereichs hinter dem Fahrzeug darzustellen, das die abgeleitete Bildszene enthält. Eine Bildverarbeitungseinheit führt zunächst eine Koordinatentransformation eines aufgenommenen Bildes durch, um ein Bild aus der Vogelschau zu erzeugen. Zwei chronologisch aufeinanderfolgende Bilder aus der Vogelschau werden als das Vogelschau-Bild erzeugt, und ein übereinstimmender Bereich der beiden Bilder wird extrahiert. Auf der Grundlage dieses übereinstimmenden Bereichs wird ein bewegter Bereich extrahiert, der das aktuelle Gesichtsfeld der Rückfahrkamera verlassen hat. Ein Bild des übereinstimmenden Bereichs und des bewegten Bereichs wird auf einem Monitor dargestellt. Auf diese Weise ist es möglich, ein Bild darzustellen, das auch eine Szene enthält, die das aktuelle Blickfeld der Rückfahrkamera verlassen hat.

Aus der US 2008/0129539 A1 ist ein Fahrzeugumgebungs-Überwachungssystem bekannt, das eine Bildaufnahmeeinrichtung, eine Speichereinrichtung, eine Bilderzeugungseinrichtung und eine Wiedergabeeinrichtung umfasst. Die Bildaufnahmeeinrichtung nimmt das Bild wenigstens eines Teils des das Fahrzeug umgebenden Bereichs auf. Die Speichereinrichtung speichert das von der Bildaufnahmeeinrichtung aufgenommene Bild. Die Bilderzeugungseinrichtung erzeugt ein synthetisiertes Bild zur Wiedergabe unter Benutzung eines als Letztes von der Bildaufnahmeeinrichtung aufgenommenen, letzten Bildes sowie eines vor diesem letzten Bild aufgenommenen, voraufgehenden Bildes. Das synthetisierte Bild wird in der Wiedergabeeinrichtung angezeigt. Die Bilderzeugungseinrichtung reduziert den Sichtbarkeitsgrad eines zu dem voraufgehenden Bild gehörenden Bildbereichs nach Ablauf einer Zeitdauer nach Aufnahme des voraufgehenden Bildes.

Bei diesem Fahrzeugumgebungs-Überwachungssystem gemäß US 2008/0129539 A1 liefern eine Frontkamera und eine Heckkamera je eine Bildfolge. Um ohne zusätzliche Kameras an den Fahrzeugseiten ein vollständiges Rundumbild zu erhalten, werden die aktuellen Aufnahmen der Frontkamera und der Heckkamera mit voraufgehenden Aufnahmen der Frontkamera und der Heckkamera kombiniert, wobei die voraufgehenden Aufnahmen nach einer vorgegebenen Zeitspanne allmählich ausgeblendet werden.

Aus der US 2010/0201818 A1 ist ein Fahrzeugumgebungs-Wiedergabegerät für ein Fahrzeug bekannt. Das Gerät umfasst: Eine Bildaufnahmeeinrichtung zum Erfassen eines Umgebungsbildes; ein Speichermedium zum Speichern das Umgebungsbild oder Information über ein in der Umgebung befindliches Objekt enthaltender Verbänderungsdaten, wobei das Speichermedium ein Fahrzeugbild vorspeichert; einen Bildschirm mit einem Echtzeit-Wiedergabeteil zum darauf Wiedergeben des Umgebungsbildes mit unkorrigierten Bildverzerrungen des Umgebungsbildes, und mit einem Veränderungs-Wiedergabeteil zum darauf Anzeigen des Fahrzeugbildes und eines auf Grundlage der Veränderungsdaten erzeugten Veränderungsbildes; und einen Darstellungsabschnitt, eingerichtet zum überlagernden Wiedergeben des Fahrzeugbildes und des Veränderungsbildes, versehen mit der Verzerrung des Umgebungsbildes, so dass das im Veränderungsbild gezeigte, in der Umgebung befindliche Objekt kontinuierlich verbunden ist mit dem im Umgebungsbild gezeigten Objekt. Auf diese Weise soll ein Sprung in der Darstellung von Objekten, z.B. Parkraummarkierungen, zwischen dem Umgebungsbild und dem Veränderungsbild vermieden werden.

Aus der EP 1 777 144 A1 sind ein Verfahren und ein Gerät zur Einparkhilfe bekannt. Das Gerät umfasst eine CPU zum Gewinnen von Bilddaten aus einer auf einem Fahrzeug angeordneten Kamera, einen Bildspeicher zum Speichern der gewonnenen Bilddaten als aufgezeichnete Daten, und einen Bildprozessor zum Erkennen eines Objekts auf Grundlage der Bilddaten. Der Bildprozessor bestimmt, wann ein Einparkhilfebild anzuzeigen ist, um einen in einem toten Winkel der Kamera versteckten Bereich sichtbar zu machen, begründet auf einer Position des Objekts, wenn sich dieses im toten Winkel der Kamera befindet, und gibt das Einparkhilfebild wieder unter Benutzung sowohl der laufenden, aktuellen, an der aktuellen Position des Fahrzeugs aufgenommenen Bilddaten als auch der aufgezeichneten Daten des im toten Winkel versteckten Bereichs der Kamera, zusammen mit einem Indikator zum Anzeigen der aktuellen Position des Fahrzeugs auf einer Wiedergabeeinrichtung.

Aus der FR 2 977 550 ist eine Anordnung zur Wiedergabe eines synthetisierten Bildes eines ausgewählten Bereichs um ein Fahrzeug herum bekannt. Die Anordnung ist dazu bestimmt, einem Fahrer des Fahrzeugs zu helfen, und umfasst Verarbeitungsmittel, die dazu eingerichtet sind, in Gegenwart wenigstens einer Erstinformation, die die Möglichkeit signalisiert, dass das Fahrzeug ein Manöver beginnt, Gruppen von Bilddaten zu erhalten, die für zu fortlaufenden Zeitpunkten in wenigstens einem das Fahrzeug teilweise umgebenden und einen ausgewählten Bereich bildenden Aufnahmebereich gewonnene Zwischenbilder repräsentativ sind, und ferner dazu eingerichtet sind, wenn ein solches Manöver zu einem Zeitpunkt tatsächlich beginnt, eine Darstellung eines synthetischen Bildes in einer gewählten Ansicht des ausgewählten Bereichs zu diesem Zeitpunkt bereitzustellen, wobei das synthetische Bild beginnend mit den erhaltenen Gruppen der Bilddaten gebildet wird und geeignet ist, auf einem im Fahrzeug vorhandenen Bildschirm dargestellt zu werden. Der nächstliegende Stand der Technik ist in der US 2003/0165255 A1 zu sehen.

### Offenbarung der Erfindung

Aufgabe der vorliegenden Erfindung ist es, ein Manövrierassistenzsystem vorzuschlagen, welches ein präzises Ausrichten eines Fahrzeuges an einen Parkraum begrenzende Strukturen ermöglicht und kostengünstig bereitgestellt werden kann.
Dazu wird ein Verfahren zum Manövrieren eines Fahrzeuges, insbesondere zum Manövrieren eines Fahrzeuges in einen Parkraum, vorgeschlagen, welches die folgenden Schritte aufweist:
a) Erfassen eines ersten Bereiches mittels eines ersten Bildes zu einem ersten Zeitpunkt;
b) Detektieren von mindestens einem ersten Element innerhalb des ersten Bereiches im ersten Bild und/oder Speichern des ersten Bildes;
c) Erfassen eines zweiten Bereiches mittels eines zweiten Bildes zu einem zweiten Zeitpunkt, wobei der zweite Bereich zumindest teilweise außerhalb des ersten Bereiches liegt, und wobei der zweite Zeitpunkt zeitlich nach dem ersten Zeitpunkt liegt;
d) Berechnen der Position des im ersten Bild zum ersten Zeitpunkt detektierten ersten Elements bezogen auf den zweiten Zeitpunkt, wobei die Position außerhalb des zweiten Bereiches liegt, und/oder Berechnen der Position des ersten Bildes bezogen auf den zweiten Zeitpunkt; und
e) Einfügen und Anzeigen des ersten Bildes und/oder des ersten Elements an der in Schritt d) berechneten Position in das zweite Bild als virtuelles erstes Element.

Bei dem Fahrzeug kann es sich um jedes beliebige Fahrzeug, insbesondere Straßenfahrzeug, handeln. Beispielsweise handelt es sich bei dem Fahrzeug um einen Pkw, einen Lastkraftwagen oder einen Bus.

Unter den Bereichen, beispielsweise dem ersten Bereich und dem zweiten Bereich, welche mittels Bildern zu unterschiedlichen Zeitpunkten erfasst werden, sind Außenbereiche, das heißt Bereiche außerhalb des Fahrzeuges, zu verstehen. Vorzugsweise handelt es sich dabei um horizontale oder dreidimensionale Bereiche. Unter den jeweiligen Bereichen sind jeweils die Bereiche zu verstehen, welche durch ein Bilderfassungssystem, beispielsweise eine Kamera, am oder im Fahrzeug erfasst werden beziehungsweise erfasst werden können. Beispielsweise könnte es sich bei dem ersten Bereich und dem zweiten Bereich jeweils um den rückwärtigen Bereich eines Fahrzeuges, welcher durch eine Rückfahrkamera zu dem jeweiligen Zeitpunkt erfasst wird, handeln.

Somit wird in Schritt a) beispielsweise der von einer Rückfahrkamera erfassbare rückwärtige Bereich eines Fahrzeuges als erster Bereich zu einem ersten Zeitpunkt mittels eines ersten Bildes erfasst. Mittels geeigneter Algorithmen, beispielsweise eines Algorithmus zur Liniendetektion, wird in Schritt b) ein erstes Element innerhalb dieses ersten Bereiches im ersten Bild detektiert. Alternativ oder zusätzlich wird in Schritt b) das erste Bild, beziehungsweise die Bildinformation des ersten Bildes gespeichert, beziehungsweise zwischengespeichert. Zu einem zweiten Zeitpunkt wird in Schritt c) ein zweiter Bereich, beispielsweise der zu diesem Zeitpunkt von einer Rückfahrkamera eines Fahrzeuges erfassbare Bereich, mittels eines zweiten Bildes erfasst. Vorzugsweise befindet sich das Fahrzeug zum zweiten Zeitpunkt nicht mehr an derselben Stelle wie zum ersten Zeitpunkt. Das heißt, das Fahrzeug hat sich zwischen dem ersten Zeitpunkt und dem zweiten Zeitpunkt bewegt, beispielsweise rückwärts bewegt. Somit ist der zweite Bereich nicht identisch mit dem ersten Bereich, das heißt, der zweite Bereich liegt zumindest bereichsweise oder teilweise außerhalb des ersten Bereichs. Beispielsweise könnten der erste Bereich und der zweite Bereich sich gegenseitig überlappen. Ferner könnten der erste Bereich und der zweite Bereich aneinander angrenzen.

In Schritt d) wird mittels geeigneter Algorithmen die Position des detektierten ersten Elements zum zweiten Zeitpunkt berechnet. Da sich das detektierte erste Element in dem Teil des ersten Bereiches befindet, welcher nicht mit dem zweiten Bereich überlappt, und somit zum zweiten Zeitpunkt außerhalb des zweiten Bereiches liegt, kann das erste Element zum zweiten Zeitpunkt nicht mehr durch ein Bilderfassungssystem, beispielsweise Rückfahrkamera, erfasst werden. Die Position des ersten Elements zum zweiten Zeitpunkt wird deshalb berechnet. Alternativ oder zusätzlich wird in Schritt d) die Position des ersten Bildes bezogen auf den zweiten Zeitpunkt berechnet. In Schritt e) wird an dieser errechneten Position das erste Bild und/oder das erste Element als virtuelles Element, beispielsweise als Strichzeichnung, in das zweite Bild eingefügt und angezeigt.

Bevorzugt werden die jeweiligen Bilder, beispielsweise das erste Bild und das zweite Bild, zu dem jeweiligen Zeitpunkt auf einem Bildschirm oder einem Monitor im Fahrzeug angezeigt. Bevorzugt umfassen die angezeigten Bilder dabei mehr als nur den zu diesem Zeitpunkt erfassten Bereich. Beispielsweise wird im zweiten Bild als virtuelles erstes Element auch die Position des ersten Elementes außerhalb des zweiten Bereiches angezeigt. Ferner wird beispielsweise zusätzlich in den Bildern, beispielsweise dem ersten Bild und dem zweiten Bild, als weiteres virtuelles Element das Fahrzeug oder zumindest die aktuelle Position des Fahrzeuges angezeigt.

Die Zeitabstände der Zeitpunkte, beispielsweise der Abstand zwischen dem ersten Zeitpunkt und dem zweiten Zeitpunkt, können jeden geeigneten Zeitabstand aufweisen. Beispielsweise können diese Zeitabstände im Sekunden- oder Millisekundenbereich liegen.

Durch das Verfahren zum Manövrieren eines Fahrzeuges kann beispielsweise ein von einer Kamera erfasster Bereich, sowie die in diesem Bereich detektierten Elemente, abhängig von der Bewegung eines Fahrzeuges kontinuierlich in den Bereich außerhalb des von der Kamera erfassten Bereiches projiziert werden. Damit bekommt ein Fahrer die Möglichkeit, sich an beispielsweise statischen Strukturen im Bild auszurichten.

Beispielsweise kann somit ein aktuelles Kamerabild um virtuelle Hilfslinien, wobei deren Position durch vorher detektierte sichtbare Linien errechnet wurde, ergänzt werden. Bevorzugt kann die Berechnung beziehungsweise Umsetzung auf einem 3D-Prozessor (GPU) einer Head Unit des Fahrzeuges beziehungsweise des Manövrierassistenzsystems erfolgen.

Des Weiten ist bevorzugt, dass in einem weiteren Schritt f) mindestens ein zweites Element innerhalb des zweiten Bereiches im zweiten Bild detektiert wird. Alternativ oder zusätzlich wird in Schritt f) das zweite Bild, beziehungsweise die Bildinformation des zweiten Bildes gespeichert, beziehungsweise zwischengespeichert. Daraufhin wird vorzugsweise in einem Schritt g) ein dritter Bereich mittels eines dritten Bildes zu einem dritten Zeitpunkt erfasst, wobei der dritte Bereich mindestens teilweise außerhalb des zweiten Bereiches sowie vorzugsweise auch teilweise außerhalb des ersten Bereiches liegt. Der dritte Zeitpunkt liegt vorzugsweise zeitlich nach dem ersten und dem zweiten Zeitpunkt. In einem folgenden Schritt h) wird vorzugsweise die Position des im zweiten Bild zum zweiten Zeitpunkt detektierten zweiten Elementes bezogen auf den dritten Zeitpunkt berechnet. Dabei liegt die Position des im zweiten Bild zum zweiten Zeitpunkt detektierten zweiten Elementes außerhalb des dritten Bereiches. Alternativ oder zusätzlich wird in Schritt h) die Position des zweiten Bildes bezogen auf den dritten Zeitpunkt berechnet. Des Weiteren wird vorzugsweise in einem nächsten Schritt das zweite Bild und/oder das zweite Element an der in Schritt h) berechneten Position in das dritte Bild als virtuelles zweites Element eingefügt und angezeigt.

Ferner ist bevorzugt, dass die jeweiligen Schritte in vorgegebenen Zeitabständen wiederholt werden. Ferner wäre es möglich, die jeweiligen Schritte jeweils dann zu wiederholen, wenn das Fahrzeug sich um eine vorgegebene Distanz bewegt hat, beziehungsweise bewegt wurde. Durch das Wiederholen der einzelnen Verfahrensschritte können aneinander angrenzende oder auch teilweise überlappende weitere Bereiche mittels weiterer Bilder zu aufeinanderfolgenden Zeitpunkten erfasst werden. Ferner können weitere Elemente innerhalb dieser weiteren Bereiche in den weiteren Bildern detektiert werden und die jeweiligen Positionen der weiteren Elemente jeweils bezogen auf den folgenden Zeitpunkt berechnet und als virtuelle weitere Elemente in das aktuelle Bild eingefügt und in diesem angezeigt werden.

Es entsteht somit für den Betrachter des jeweiligen aktuellen Bildes, beispielsweise bei Ausgabe des Bildes auf einem Monitor eines Manövrierassistenzsystems im Fahrzeug, der Eindruck, dass das Fahrzeug virtuell über die zu früheren Zeitpunkten erfassten Bereiche geschoben, beziehungsweise bewegt wird.

Vorzugsweise basiert das Verfahren zum Manövrieren eines Fahrzeuges nur auf einer Rückfahr- und/oder Vorwärtsfahrt-Kamera (Frontkamera). Die seitlichen Bereiche neben dem Fahrzeug können somit nicht durch Kameras erfasst werden. Bei Betrachtung des aktuellen Bildes auf einem Monitor eines Manövrierassistenzsystems können durch dieses Verfahren allerdings Elemente aus nicht mehr erfassbaren Bereichen weiterhin angezeigt werden.

Vorzugsweise handelt es sich bei den Elementen, beispielsweise dem ersten Element und/oder dem zweiten Element und/oder einem dritten Element und/oder weiteren Elementen, um sogenannte statische Strukturen, beispielsweise einen Parkraum begrenzende bzw. kennzeichnende Strukturen. Somit könnten diese statischen Strukturen beispielsweise Linien, wie z. B. einen Parkplatz oder einen Parkraum begrenzende Linien, welche auf dem Boden eingezeichnet sind, darstellen. Ferner könnte es sich bei kennzeichnenden Strukturen um statische Strukturen innerhalb des Parkraums, beispielsweise um Kanaldeckel oder Abflussrinnen, handeln. Insbesondere handelt es sich bei diesen Elementen auch um Bereiche größerer oder längerer Strukturen, welche zum jeweiligen Zeitpunkt vom Bilderfassungssystem, beispielsweise einer Kamera, vollständig oder ausschnittsweise erfasst werden. Ferner könnte es sich bei den statischen Strukturen um beispielsweise Bordsteinkanten, parkende Fahrzeuge, Poller, Geländer, Mauern oder anderweitige einen Parkraum begrenzende Strukturen handeln.

Des Weiteren ist bevorzugt, dass der durch das erste Bild erfasste und nicht mit dem zweiten Bereich überlappende Teil des ersten Bereiches im zweiten Bild und außerhalb des zweiten Bereiches angezeigt wird. Somit ist vorzugsweise vorgesehen, dass nicht nur detektierte Elemente in den nächsten Bereich projiziert werden, sondern komplette Bildinformationen vorher aufgenommener Kamerabilder in das jeweilige aktuelle Bild projiziert werden. Hierbei ist vorzugsweise vorgesehen, dass die projizierten Bildteile als virtuelle Strukturen gekennzeichnet werden. Dadurch kann dem aktuellen Bild entnommen werden, dass es sich bei einem bestimmten Bereich des Bildes nicht um sogenannte "Live"-Informationen handelt. Beispielsweise könnten derartige Bildteile comic-artig (3D-Art-Map) als Strichzeichnung, Geisterbild oder Gradientenbild dargestellt sein.

Bevorzugt erfolgt die Berechnung der Position des im ersten Bild zum ersten Zeitpunkt detektierten ersten Elementes bezogen auf den zweiten Zeitpunkt, basierend auf einer Bewegungskompensation. Somit erfolgt die Berechnung der Position unter Berücksichtigung der zwischen den jeweiligen Zeitpunkten, beispielsweise dem ersten Zeitpunkt und dem zweiten Zeitpunkt, erfolgten Bewegung des Fahrzeuges. Insbesondere ist dabei vorgesehen, dass die Berechnung der Position auf einer Translation des Fahrzeuges basiert. Unter Translation ist eine Bewegung zu verstehen, bei welcher sämtliche Punkte eines starren Körpers, in diesem Fall das Fahrzeug, dieselbe Verschiebung erfahren. Hierbei wird somit sowohl die zurückgelegte Strecke, das heißt Entfernung, sowie auch Richtung (beispielsweise bei Kurvenfahrt) erfasst. Des Weiteren basiert die Berechnung der Position vorzugsweise auf dem Gierwinkel einer im oder am Fahrzeug angeordneten Kamera oder dem Gierwinkel des Fahrzeugs. Unter dem Gierwinkel ist der Winkel einer Rotationsbewegung, beziehungsweise Drehbewegung, der Kamera oder des Fahrzeugs um ihre oder seine Vertikalachse, beziehungsweise Hochachse, zu verstehen. Insbesondere kann durch die Berücksichtigung des Gierwinkels somit die erfolgte Richtungsänderung eines Fahrzeuges zwischen den jeweiligen Zeitpunkten bei der Bewegungskompensation berücksichtigt werden.

Außerdem basiert die Berechnung der Position bevorzugt auch auf einem Nickwinkel oder/und Wankwinkel der Kamera oder des Fahrzeugs. Unter dem Nickwinkel ist der Winkel einer Rotationsbewegung, beziehungsweise Drehbewegung, der Kamera oder des Fahrzeugs um ihre oder seine Querachse zu verstehen. Unter dem Wankwinkel ist der Rollwinkel und somit der Winkel einer Rotationsbewegung, beziehungsweise Drehbewegung, der Kamera oder des Fahrzeugs um ihre oder seine Längsachse zu verstehen. Dadurch kann eine Höhenänderung des Fahrzeugs oder der Kamera bezogen auf die Fahrbahnebene bei der Bewegungskompensation berücksichtigt werden.

Ferner ist vorzugsweise vorgesehen, dass weitere Bildinformationen, beispielsweise zu einem früheren Zeitpunkt erfasste und aufgenommene Bilder, berücksichtigt und verwendet werden. Derartige weitere Bildinformationen können in das aktuelle Bild eingefügt und angezeigt werden. Beispielsweise kann es sich hierbei auch um sogenannte externe Bildinformationen handeln. Externe Bildinformationen können beispielsweise auf Speichermedien oder auch durch online-Kartendienste bereitgestellt werden.

Erfindungsgemäß ist ein Manövrierassistenzsystem, insbesondere zum Einparken, für ein Fahrzeug vorgesehen, wobei das Manövrierassistenzsystem auf einem vorabbeschriebenen Verfahren zum Manövrieren eines Fahrzeuges basiert. Dabei weist das Manövrierassistenzsystem ein am oder im Fahrzeug und im hinteren Bereich des Fahrzeuges angeordnetes erstes Bilderfassungsmittel zum Erfassen des ersten Bereiches mittels eines ersten Bildes auf. Beispielsweise handelt es sich bei dem ersten Bilderfassungsmittel um eine erste Kamera, insbesondere Rückfahrkamera. Dabei ist somit vorzugsweise vorgesehen, dass das erste Bilderfassungsmittel im Wesentlichen nach hinten gerichtet ist.

Des Weiteren ist vorgesehen, dass das Manövrierassistenzsystem ein am oder im Fahrzeug und im vorderen Bereich des Fahrzeuges angeordnetes zweites Bilderfassungsmittel zum Erfassen des ersten Bereiches mittels des ersten Bildes aufweist. Beispielsweise handelt es sich bei dem zweiten Bilderfassungssystem um eine Vorwärtsfahrkamera. Somit ist vorzugsweise vorgesehen, dass das zweite Bilderfassungsmittel im Wesentlichen nach vorne gerichtet ist.

Durch das Vorsehen eines zweiten Bilderfassungsmittels, beispielsweise einer zweiten Kamera, welches nach vorne gerichtet ist, kann durch das Manövrierassistenzsystem nicht nur ein Assistenzsystem für die Rückwärtsfahrt eines Fahrzeuges, sondern auch für die Vorwärtsfahrt eines Fahrzeuges bereitgestellt werden. Beispielsweise kann durch eine nach vorne gerichtete Kamera auch ein Parkmanöver bei Vorwärtsfahrt eines Fahrzeuges auf einem Bildschirm angezeigt werden. Dabei sind sämtliche vorbeschriebenen Merkmale eines Verfahrens zum Manövrieren eines Fahrzeuges, auch bei Verwendung einer nach vorne gerichteten Kamera, vorgesehen.

Des Weiteren ist vorzugsweise vorgesehen, dass das Manövrierassistenzsystem nicht mehr als ein oder zwei Bilderfassungsmittel, insbesondere Kameras, aufweist.

Bevorzugt weist das Manövrierassistenzsystem ferner Mittel, insbesondere Sensoren, zur Erfassung der Eigenbewegung, insbesondere der Translation, des Fahrzeuges auf. Die Eigenbewegung des Fahrzeuges kann vorzugsweise mit Hilfe von Sensoren und/oder unter Verwendung von Odometrie, Trägheitssensorik, Lenkwinkel oder direkt aus dem Bild bestimmt werden.

Die Erfindung wird nun mit Bezug auf die begleitenden Zeichnungen anhand besonders bevorzugter Ausführungsformen beispielhaft erläutert.

Es zeigen schematisch:
- Figur 1: eine schaubildliche Ansicht eines Fahrzeugs bei Rückwärtsfahrt zu einem ersten Zeitpunkt,
- Figur 2: eine schaubildliche Ansicht eines Fahrzeugs bei Rückwärtsfahrt zu einem zweiten Zeitpunkt,
- Figur 3: eine schaubildliche Ansicht eines Fahrzeugs bei Rückwärtsfahrt zu einem dritten Zeitpunkt, und
- Figur 4: eine schaubildliche Sequenz von mehreren Bildern eines Einpark-Manövers eines Fahrzeuges.

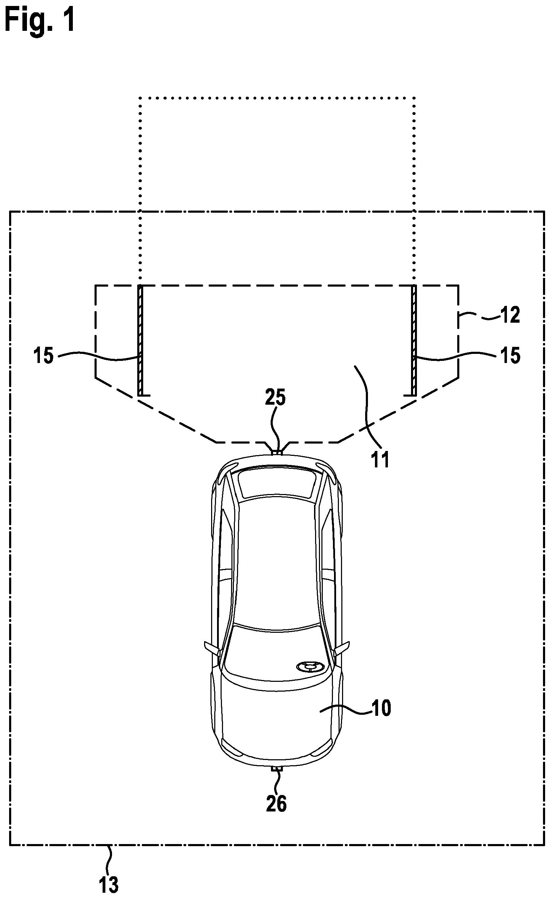

In Figur 1 ist ein Fahrzeug 10 zu Beginn eines Einpark-Manövers gezeigt. Sowohl im hinteren Bereich des Fahrzeuges 10 sowie auch im vorderen Bereich des Fahrzeuges 10 ist jeweils ein Bilderfassungsmittel 25, 26, nämlich jeweils eine Kamera, angeordnet. Mit gestrichelten Linien ist der bei Rückwärtsfahrt des Fahrzeuges 10 von dem ersten Bilderfassungsmittel 25 erfassbare und erfasste erste Bereich 12 zum ersten Zeitpunkt 14 gekennzeichnet. Der Parkraum 11 ist durch am Boden eingezeichnete Linien begrenzt. Die außerhalb des ersten Bereiches 12 liegenden Linien sind gepunktet in Figur 1 gekennzeichnet. Die vom ersten Bilderfassungsmittel 25 zum ersten Zeitpunkt 14 innerhalb des ersten Bereiches 12 erfassten ersten Elemente 15 stellen jeweils einen Ausschnitt der am Boden markierten Linien der Parkplatzbegrenzung dar.

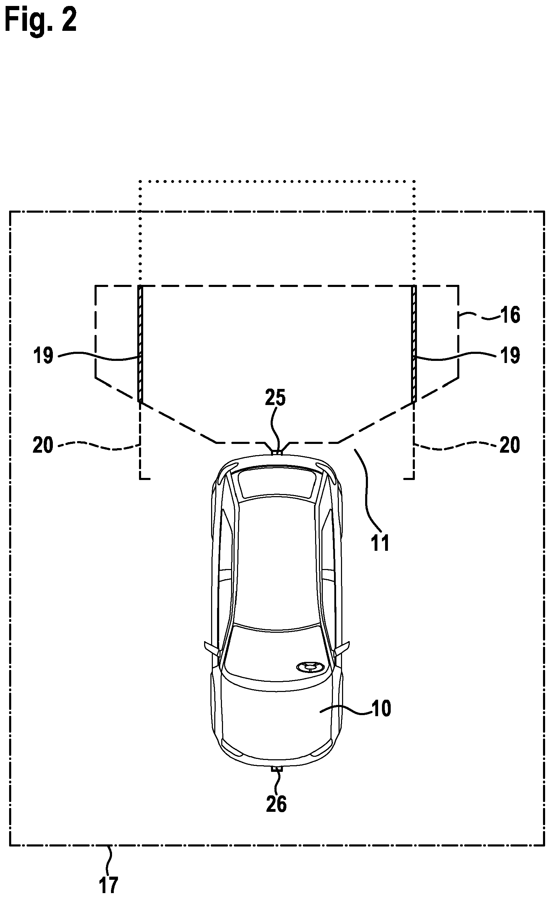

In Figur 2 ist das Fahrzeug 10 zum zweiten Zeitpunkt 18 gezeigt. Zwischen dem ersten Zeitpunkt 14 und zweiten Zeitpunkt 18 wurde das Fahrzeug rückwärts in Richtung des Parkraums 11 bewegt. Der zum zweiten Zeitpunkt 18 erfasste zweite Bereich 16 ist wiederum strichlinienartig gekennzeichnet. Die ersten Elemente 15 werden durch das erste Bilderfassungsmittel 25 zum zweiten Zeitpunkt 18 nicht mehr innerhalb des zweiten Bereiches 16 erfasst. Die Position dieser ersten Elemente 15 wurde mittels Algorithmen basierend auf der Bewegungskompensation für den zweiten Zeitpunkt 18 berechnet. Diese ersten Elemente 15 sind in Figur 2 zum zweiten Zeitpunkt 18 als virtuelle erste Elemente 20 strichlinienartig gekennzeichnet. Die zweiten Elemente 19 innerhalb des zweiten Bereiches 16 werden durch das erste Bilderfassungsmittel 25 zum zweiten Zeitpunkt 18 erfasst.

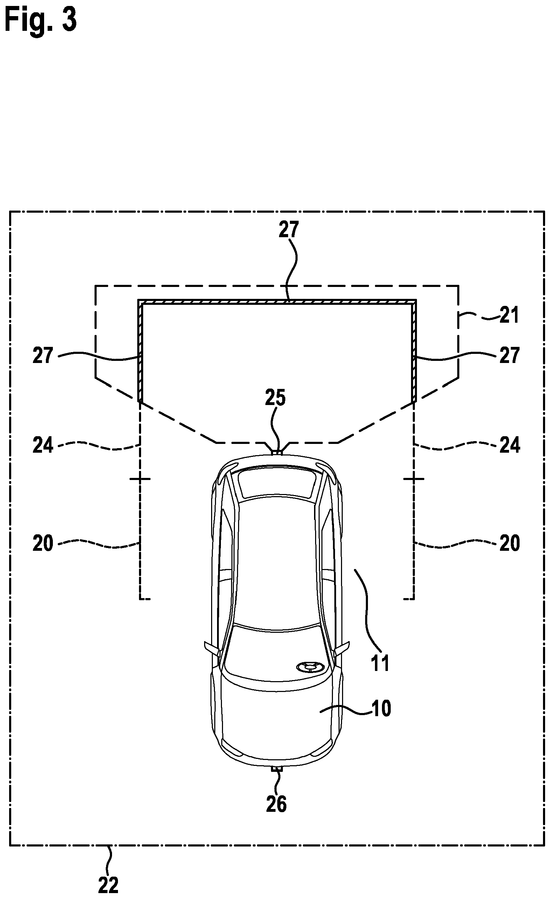

In Figur 3 ist das Fahrzeug 10 zu einem dritten Zeitpunkt 23 gezeigt. Zusätzlich zu den virtuellen ersten Elementen 20 sind zum dritten Zeitpunkt 23 auch die virtuellen zweiten Elemente 24 strichlinienartig eingezeichnet. Die zum dritten Zeitpunkt 23 vom ersten Bilderfassungsmittel 25 erfassten dritten Elemente 27 stellen den Endbereich der Markierung des Parkraums 11 dar. Das Fahrzeug 10 ist zum dritten Zeitpunkt 23 in etwa zur Hälfte in den Parkraum 11 hineingefahren. Obwohl durch das erste Bilderfassungsmittel 25, nämlich die Rückfahrkamera, nur der dritte Bereich 21, nämlich der Endbereich des Parkraums 11, erfasst werden kann, wird im dritten Bild 22 die komplette Markierung, beziehungsweise Begrenzung, des Parkraums 11 angezeigt.

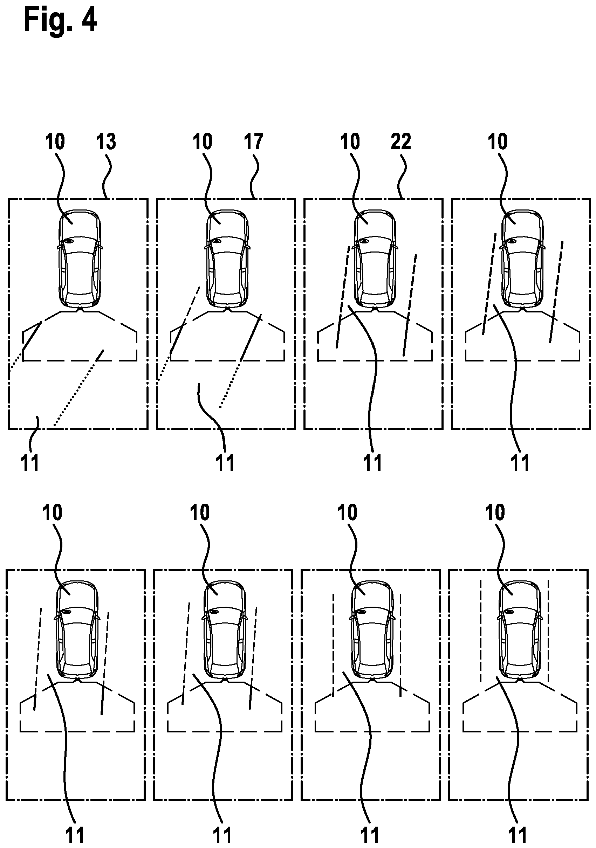

Figur 4 zeigt eine Sequenz mehrerer aufeinanderfolgender Bilder bei einem Einpark-Manöver eines Fahrzeuges 10 bei Rückwärtsfahrt. Die einzelnen Bilder stellen dabei aufeinanderfolgende Zeitpunkte dar. Der Parkraum 11 ist wiederum durch Markierungen (Striche) am Boden gekennzeichnet. Die jeweils detektierten und zum aktuellen Zeitpunkt außerhalb des aktuellen Bereiches liegenden Linien sind als virtuelle Elemente strichlinienartig gekennzeichnet.

## Patentansprüche

1. Manövrierassistenzsystem (100), insbesondere zum Einparken, für ein Fahrzeug (10), wobei das Manövrierassistenzsystem auf einem Verfahren zum Manövrieren eines Fahrzeugs (10), insbesondere zum Manövrieren eines Fahrzeugs (10) in einen Parkraum (11), mit folgenden Schritten basiert:
a) Erfassen eines ersten Bereiches (12) mittels eines ersten Bildes (13) zu einem ersten Zeitpunkt (14);
b) Detektieren von mindestens einem ersten Element (15) innerhalb des ersten Bereichs (12) im ersten Bild (13) und/oder Speichern des ersten Bildes (13);
c) Erfassen eines zweiten Bereichs (16) mittels eines zweiten Bildes (17) zu einem zweiten Zeitpunkt (18), wobei der zweite Bereich (16) zumindest teilweise außerhalb des ersten Bereichs (12) liegt, und wobei der zweite Zeitpunkt (18) zeitlich nach dem ersten Zeitpunkt (14) liegt;
d) Berechnen der Position des im ersten Bild (13) zum ersten Zeitpunkt (14) detektierten ersten Elements (15) bezogen auf den zweiten Zeitpunkt (18), wobei die Position außerhalb des zweiten Bereichs (16) liegt, und/oder Berechnen der Position des ersten Bildes (13) bezogen auf den zweiten Zeitpunkt (18); und
e) Einfügen und Anzeigen des ersten Bildes (13) und/oder des ersten Elements (15) an der in Schritt d) berechneten Position in das zweite Bild (17) als virtuelles erstes Element (20),
wobei das Manövrierassistenzsystem (100) ein am oder im Fahrzeug (10) und im hinteren Bereich des Fahrzeugs (10) angeordnetes erstes Bilderfassungsmittel (25) zum Erfassen des ersten Bereichs (12) mittels des ersten Bildes (13) aufweist, wobei das erste Bilderfassungsmittel (25) im Wesentlichen nach hinten gerichtet ist,
**dadurch gekennzeichnet,**
**dass** das Manövrierassistenzsystem (100) ein am oder im Fahrzeug (10) und im vorderen Bereich des Fahrzeugs (10) angeordnetes zweites Bilderfassungsmittel (26) zum Erfassen des ersten Bereichs (12) mittels des ersten Bildes (13) aufweist, wobei das zweite Bilderfassungsmittel (26) im Wesentlichen nach vorne gerichtet ist.

2. Manövrierassistenzsystem gemäß Anspruch 1,
**dadurch gekennzeichnet,**
**dass** das Manövrierassistenzsystem (100) nicht mehr als ein erstes Bilderfassungsmittel (25), insbesondere eine Rückfahrkamera oder eine Frontkamera, aufweist, oder das Manövrierassistenzsystem (100) nicht mehr als zwei Bilderfassungsmittel (25, 26), insbesondere eine Rückfahrkamera und eine Frontkamera, aufweist.

3. Manövrierassistenzsystem gemäß Anspruch 1 bis 2,
**dadurch gekennzeichnet,**
**dass** das Manövrierassistenzsystem (100) Mittel, insbesondere Sensoren, zur Erfassung der Eigenbewegung, insbesondere der Translation, des Fahrzeugs (10) aufweist.

4. Manövrierassistenzsystem gemäß Anspruch 1, 2 oder 3,
**dadurch gekennzeichnet,**
**dass** das Manövrierassistenzsystem auf einem Verfahren zum Manövrieren mit des Weiteren folgenden Schritten basiert:
f) Detektieren von mindestens einem zweiten Element (19) innerhalb des zweiten Bereichs (16) im zweiten Bild (17) und/oder Speichern des zweiten Bildes (17);
g) Erfassen eines dritten Bereichs (21) mittels eines dritten Bildes (22) zu einem dritten Zeitpunkt (23), wobei der dritte Bereich (21) zumindest teilweise außerhalb des zweiten Bereichs (16) liegt, und wobei der dritte Zeitpunkt (23) zeitlich nach dem ersten Zeitpunkt (14) und dem zweiten Zeitpunkt (18) liegt;
h) Berechnen der Position des im zweiten Bild (17) zum zweiten Zeitpunkt (18) detektierten zweiten Elements (19) bezogen auf den dritten Zeitpunkt (23), wobei die Position außerhalb des dritten Bereichs (21) liegt, und/oder Berechnen der Position des zweiten Bildes (17) bezogen auf den dritten Zeitpunkt (23); und
i) Einfügen und Anzeigen des zweiten Bildes (17) und/oder des zweiten Elements (19) an der in Schritt h) berechneten Position in das dritte Bild (22) als virtuelles zweites Element (24).

5. Manövrierassistenzsystem gemäß Anspruch 4,
**dadurch gekennzeichnet,**
**dass** das Manövrierassistenzsystem auf einem Verfahren zum Manövrieren basiert, bei dem die Schritte f) bis i) in vorgegebenen Zeitabständen wiederholt werden, wodurch an einander angrenzende oder teilweise überlappende weitere Bereiche mittels weiterer Bilder zu aufeinander folgenden Zeitpunkten erfasst werden, und die weiteren Bilder abgespeichert und/oder weitere Elemente innerhalb der weiteren Bereiche in den weiteren Bildern detektiert werden, und die Positionen der weiteren Bilder und/oder Elemente jeweils bezogen auf den folgenden Zeitpunkt berechnet und als virtuelle weitere Elemente in das aktuelle Bild eingefügt und angezeigt werden.

6. Manövrierassistenzsystem gemäß einem der vorhergehenden Ansprüche,
**dadurch gekennzeichnet,**
**dass** das Manövrierassistenzsystem auf einem Verfahren zum Manövrieren basiert, bei dem es sich bei dem ersten Element (15) und/oder dem zweiten Element (19) und/oder den weiteren Elementen um statische Strukturen, insbesondere Linien, Bordsteinkanten, parkende Fahrzeuge, Poller, oder anderweitige einen Parkraum begrenzende und/oder kennzeichnende Strukturen handelt.

7. Manövrierassistenzsystem gemäß einem der vorhergehenden Ansprüche,
**dadurch gekennzeichnet,**
**dass** das Manövrierassistenzsystem auf einem Verfahren zum Manövrieren basiert, bei dem der durch das erste Bild (13) erfasste und nicht mit dem zweiten Bereich (16) überlappende Teil des ersten Bereichs (12) im zweiten Bild (17) und außerhalb des zweiten Bereichs (16) angezeigt wird.

8. Manövrierassistenzsystem gemäß einem der vorhergehenden Ansprüche,
**dadurch gekennzeichnet,**
**dass** das Manövrierassistenzsystem auf einem Verfahren zum Manövrieren basiert, bei dem die Berechnung der Position des im ersten Bild (13) zum ersten Zeitpunkt (14) detektierten ersten Elements (15) bezogen auf den zweiten Zeitpunkt (18) auf einer Bewegungskompensation basiert, und insbesondere auf einer Translation des Fahrzeugs (10) und/oder eines Gierwinkels des Fahrzeugs oder einer im oder an dem Fahrzeug (10) angeordneten Kamera (25, 26) und/oder eines Nickwinkels des Fahrzeugs oder einer im oder an dem Fahrzeug (10) angeordneten Kamera (25, 26) und/oder eines Wankwinkels des Fahrzeugs oder einer im oder an dem Fahrzeug (10) angeordneten Kamera (25, 26) basiert.

## Claims

1. Manoeuvring assistance system (100), in particular for parking, for a vehicle (10), wherein the manoeuvring assistance system is based on a method for manoeuvring a vehicle (10), in particular for manoeuvring a vehicle (10) into a parking space (11), comprising the following steps:
a) Capturing a first region (12) by means of a first image (13) at a first time (14);
b) Detecting at least one first element (15) within the first region (12) in the first image (13) and/or storing the first image (13);
c) Capturing a second region (16) by means of a second image (17) at a second time (18), wherein the second region (16) is located at least partially outside the first region (12), and wherein the second time (18) occurs chronologically after the first time (14);
d) Calculating the position of the first element (15), detected in the first image (13) at the first time (14), with respect to the second time (18), wherein the position is located outside the second region (16), and/or calculating the position of the first image (13) with respect to the second time (18); and
e) Inserting and displaying the first image (13) and/or the first element (15) at the position calculated in step d) into the second image (17) as a virtual first element (20);
wherein the manoeuvring assistance system (100) has a first image-capturing means (25), arranged on or in the vehicle (10) and in the rear region of the vehicle (10), for capturing the first region (12) by means of the first image (13), wherein the first image-capturing means (25) is directed essentially rearward,
**characterized in that**
the manoeuvring assistance system (100) has a second image-capturing means (26), arranged on or in the vehicle (10) and in the front region of the vehicle (10), for capturing the first region (12) by means of the first image (13), wherein the second image-capturing means (26) is directed essentially forwards.

2. Manoeuvring assistance system according to Claim 1,
**characterized in that**
the manoeuvring assistance system (100) does not have more than a first image-capturing means (25), in particular a rear view camera or a front view camera, or the manoeuvring assistance system (100) does not have more than two image-capturing means (25, 26), in particular a rear view camera and a front view camera.

3. Manoeuvring assistance system according to Claims 1 to 2,
**characterized in that**
the manoeuvring assistance system (100) has means, in particular sensors, for sensing the intrinsic movement, in particular the translation, of the vehicle (10).

4. Manoeuvring assistance system according to Claim 1, 2 or 3,
**characterized in that**
the manoeuvring assistance system is based on a system for manoeuvring comprising the following further steps:
f) Detecting at least one second element (19) within the second region (16) in the second image (17) and/or storing the second image (17);
g) Capturing a third region (21) by means of a third image (22) at a third time (23), wherein the third region (21) is located at least partially outside the second region (16), and wherein the third time (23) occurs chronologically after the first time (14) and the second time (18);
h) Calculating the position of the second element (19), detected in the second image (17) at the second time (18), with respect to the third time (23), wherein the position is located outside the third region (21), and/or calculating the position of the second image (17) with respect to the third time (23) ; and
i) Inserting and displaying the second image (17) and/or the second element (19) at the position calculated in step h) into the third image (22) as a virtual second element (24).

5. Manoeuvring assistance system according to Claim 4,
**characterized in that**
the manoeuvring assistance system is based on a manoeuvring method, in which steps f) to i) are repeated at predefined time intervals, as a result of which further regions which adjoin one another or partially overlap one another are captured by means of further images at successive times, and the further images are stored and/or further elements within the further regions are detected in the further images, and the positions of the further images and/or elements are each calculated with respect to the following time and are inserted as virtual further elements into the actual image and displayed.

6. Manoeuvring assistance system according to one of the preceding claims,
**characterized in that**
the manoeuvring assistance system is based on a manoeuvring method in which the first element (15) and/or the second element (19) and/or the further elements are static structures, in particular lines, kerbstones, parked vehicles, bollards or other types of structures which delimit and/or characterize a parking space.

7. Manoeuvring assistance system according to one of the preceding claims,
**characterized in that**
the manoeuvring assistance system is based on a manoeuvring method in which the part of the first region (12) which is covered by the first image (13) and does not overlap with the second region (16) is displayed in the second image (17) and outside the second region (16).

8. Manoeuvring assistance system according to one of the preceding claims,
**characterized in that**
the manoeuvring assistance system is based on a manoeuvring method in which the calculation of the position of the first element (15), which is detected in the first image (13) at the first time (14), with respect to the second time (18) is based on a movement compensation, and in particular on a translation of the vehicle (10) and/or on a yaw angle of the vehicle or of a camera (25, 26) which is arranged in or on the vehicle (10) and/or a pitch angle of the vehicle or of a camera (25, 26) which is arranged in or on the vehicle (10) and/or of a rolling angle of the vehicle or of a camera (25, 26) which is arranged in or on the vehicle (10).

## Revendications

1. Système d'assistance à la manoeuvre (100), notamment pour l'entrée en stationnement, pour un véhicule (10), le système d'assistance à la manoeuvre se basant sur un procédé pour manoeuvrer un véhicule (10), notamment pour manoeuvrer un véhicule (10) dans un emplacement de stationnement (11), comprenant les étapes suivantes :
a) acquisition d'une première zone (12) au moyen d'une première image (13) à un premier instant (14) ;
b) détection d'au moins un premier élément (12) à l'intérieur de la première zone (12) dans la première image (13) et/ou enregistrement de la première image (13) ;
c) acquisition d'une deuxième zone (16) au moyen d'une deuxième image (17) à un deuxième instant (18), la deuxième zone (16) se trouvant au moins partiellement à l'extérieur de la première zone (12) et le deuxième instant (18) étant postérieur dans le temps au premier instant (14) ;
d) calcul de la position du premier élément (15) détecté dans la première image (13) au premier instant (14) en référence au deuxième instant (18), la position se trouvant en-dehors de la deuxième zone (16), et/ou calcul de la position de la première image (13) en référence au deuxième instant (18) ; et
e) insertion et affichage de la première image (13) et/ou du premier élément (15) à la position calculée à l'étape d) dans la deuxième image (17) en tant que premier élément virtuel (20),
le système d'assistance à la manoeuvre (100) possédant, sur ou dans le véhicule (10) et dans la zone arrière du véhicule (10), un premier moyen d'acquisition d'images (25) destiné à acquérir la première zone (12) au moyen de la première image (13), le premier moyen d'acquisition d'images (25) étant sensiblement orienté vers l'arrière,
**caractérisé en ce que** le système d'assistance à la manoeuvre (100) possède, sur ou dans le véhicule (10) et dans la zone avant du véhicule (10), un deuxième moyen d'acquisition d'images (26) destiné à acquérir la première zone (12) au moyen de la première image (13), le deuxième moyen d'acquisition d'images (26) étant sensiblement orienté vers l'avant.

2. Système d'assistance à la manoeuvre selon la revendication 1, **caractérisé en ce que** le système d'assistance à la manoeuvre (100) ne possède pas plus qu'un premier moyen d'acquisition d'images (25), notamment une caméra de recul ou une caméra frontale, ou le système d'assistance à la manoeuvre (100) ne possède pas plus que deux moyens d'acquisition d'images (25, 26), notamment une caméra de recul et une caméra frontale.

3. Système d'assistance à la manoeuvre selon la revendication 1 à 2, **caractérisé en ce que** le système d'assistance à la manoeuvre (100) possède des moyens, notamment des capteurs, pour détecter le mouvement propre, notamment la translation, du véhicule (10).

4. Système d'assistance à la manoeuvre selon la revendication 1, 2 ou 3, **caractérisé en ce que** le système d'assistance à la manoeuvre se base sur un procédé pour manoeuvrer comprenant les étapes supplémentaires suivantes :
f) détection d'au moins un deuxième élément (19) à l'intérieur de la deuxième zone (16) dans la deuxième image (17) et/ou enregistrement de la deuxième image (17) ;
g) acquisition d'une troisième zone (21) au moyen d'une troisième image (22) à un troisième instant (23), la troisième zone (21) se trouvant au moins partiellement à l'extérieur de la deuxième zone (16) et le troisième instant (23) étant postérieur dans le temps au premier instant (14) et au deuxième instant (18) ;
h) calcul de la position du deuxième élément (19) détecté dans la deuxième image (17) au deuxième instant (18) en référence au troisième instant (23), la position se trouvant en-dehors de la troisième zone (21), et/ou calcul de la position de la deuxième image (17) en référence au deuxième troisième (23) ; et
i) insertion et affichage de la deuxième image (17) et/ou du deuxième élément (19) à la position calculée à l'étape h) dans la deuxième troisième (22) en tant que deuxième élément virtuel (24).

5. Système d'assistance à la manoeuvre selon la revendication 4, **caractérisé en ce que** le système d'assistance à la manoeuvre se base sur un procédé pour manoeuvrer, avec lequel les étapes f) à i) sont répétées dans des intervalles de temps prédéfinis, ce par quoi des zones supplémentaires mutuellement adjacentes ou se chevauchant partiellement sont acquises au moyen d'images supplémentaires à des instants successifs, et les images supplémentaires sont enregistrées et/ou des éléments supplémentaires sont détectés à l'intérieur des zones supplémentaires dans les images supplémentaires, et les positions des images et/ou des éléments supplémentaires sont respectivement calculées en référence à l'instant suivant et insérées puis affichées en tant qu'éléments virtuels supplémentaires dans l'image actuelle.

6. Système d'assistance à la manoeuvre selon l'une des revendications précédentes, **caractérisé en ce que** le système d'assistance à la manoeuvre se base sur un procédé pour manoeuvrer, avec lequel le premier élément (15) et/ou le deuxième élément (19) et/ou les éléments supplémentaires sont des structures statiques, notamment des lignes, des bordures de trottoir, des véhicules en stationnement, des bornes ou d'autres structures délimitant et/ou identifiant un emplacement de stationnement.

7. Système d'assistance à la manoeuvre selon l'une des revendications précédentes, **caractérisé en ce que** le système d'assistance à la manoeuvre se base sur un procédé pour manoeuvrer, avec lequel la partie de la première zone (12) acquise par la première image (13) et ne chevauchant par la deuxième zone (16) est affichée dans la deuxième image (17) et en-dehors de la deuxième zone (16).

8. Système d'assistance à la manoeuvre selon l'une des revendications précédentes, **caractérisé en ce que** le système d'assistance à la manoeuvre se base sur un procédé pour manoeuvrer, avec lequel le calcul de la position du premier élément (15) détecté dans la première image (13) au premier instant (14) en référence au deuxième instant (18) se base sur une compensation du mouvement, et se base notamment sur une translation du véhicule (10) et/ou un angle de lacet du véhicule ou d'une caméra (25, 26) disposée dans ou sur le véhicule (10) et/ou un angle d'inclinaison du véhicule ou d'une caméra (25, 26) disposée dans ou sur le véhicule (10) et/ou un angle de roulis du véhicule ou d'une caméra (25, 26) disposée dans ou sur le véhicule (10).
